# EUROPEAN PATENT SPECIFICATION

(11) **EP 4 105 405 B1**
(45) Date of publication and mention of the grant of the patent: **18.12.2024**
(21) Application number: 22162515.5
(22) Date of filing: 16.03.2022
(51) Int. Cl.: E04F 11/18, F16B 7/04, E04F 13/08

(54) **A BATTEN FIXING CLIP AND A METHOD OF FIXING THE CLIP**
LATTENBEFESTIGUNGSKLAMMER UND VERFAHREN ZUR BEFESTIGUNG DER KLAMMER
PINCE DE FIXATION DE LATTE ET PROCÉDÉ DE FIXATION DE LA PINCE

(30) Priority: 22.04.2021 AU 2021901197
(43) Date of publication of application: 21.12.2022
(73) Proprietor: Woodform Architectural Pty Ltd t/a Sculptform, Golden Square, VIC 3555 (AU)
(72) Inventor: Napier, Jeremy, Bendigo, Victoria 3555 (AU); Schwartz, Bradley, Bendigo, Victoria 3555 (AU); Scott, David, Bendigo, Victoria 3555 (AU); Wright, Alasdair, Mile End, South Australia 5031 (AU); Campbell, George, Mile End, South Australia 5031 (AU); Eden, Tim, Mile End, South Australia 5031 (AU)
(74) Representative: Nederlandsch Octrooibureau

(56) References cited:
- EP-A2- 1 493 877
- EP-A2- 2 636 815
- CN-U- 202 627 371
- CN-U- 208 917 688
- FR-A- 1 477 776
- FR-A1- 2 963 395
- US-A- 5 566 926

## Description

### Field of the Invention

The present invention relates to a clip for fixing a batten and method of using said clip.

The present invention also relates to a balustrade assembly comprising the clip.

### Background of the Invention

Battens comprising lengths of timber or aluminium pieces are typically used in buildings to line or clad the ceilings or walls.

There are a number of reasons for installing battens in a building ranging from purely decorative appeal to purely functional reasons. For example, they can be installed to form an aesthetically appealing wall/divider that provides acoustic damping.

They can also be connected to a set of parallel spaced apart rails to produce a balustrade system.

The fabrication and installation of these batten mounted structures can be time consuming and difficult. Systems exist which use screws to fix the battens directly onto the wall or ceiling surface. Other systems use stirrup-type clasps that are fixed to the wall or ceiling surface to secure the battens to the surface.

Document CN202627371U describes a connecting piece comprising a surface pipe fixing clamp, and a vertical column inclined pipe fixing cover matched with the surface pipe fixing clamp; one end of the vertical column inclined pipe fixing cover is provided with a vertical column insertion opening, two opposite sides of the vertical column inclined pipe fixing cover are provided with inclined surfaces, and another two sides of the vertical column inclined pipe fixing cover are provided with holes which correspond to holes in the surface pipe fixing clamp and are alignable to allow insertion of screws to fix the surface pipe fixing clamp to the vertical column inclined pipe fixing cover.

There are a number of problems with existing systems. One such problem is that the fixing system is often visible and detracts from the aesthetics of the overall batten-cladded wall or ceiling. Another problem is that the fasteners used to mount the battens to the fixing surface cannot accommodate thermal movement (contraction or expansion) of the battens with temperature. This may result in dangerous situations where for example, a batten loosens from the mounting surface and falls off. Furthermore, known systems are difficult to install and require mallets or other force fixing tools to install.

It is therefore desirable to provide a clip that can alleviate at least one of the above mentioned problems.

### Statement of Disclosure

The invention provides a batten fixing clip as set out in claim 1, comprising:
a male connector comprising a batten interface portion for attachment to a batten, and a female connector interface portion for engaging a female connector; and
a female connector comprising a support structure interface portion for attaching to a support structure and a male connector interface portion for engaging the male connector, the male connector interface portion including a retainer, the retainer comprising a pair of arms extending from a base of the female connector to define a channel dimensioned for receiving the female connector interface portion of the male connector,

the batten fixing clip characterized in that each arm of the retainer includes a projection which extends inwardly into the channel, and the female connector further includes a resilient clip,
the resilient clip comprises an aperture,
wherein said aperture is a through-hole or a blind hole, that receives at least part of the female connector interface portion and said resilient clip biases the female connector interface portion against the retainer when in use.

The aperture in the resilient clip captures and secures the female connector interface portion against movement relative to the female connector.

The inventors were motivated to develop a batten fixing system that could allow battens to be installed onsite with minimal or no tools. Suitably, the batten fixing system masks the fixing clips to improve the aesthetics of the finished product. More suitably, the batten fixing system reduces the chance of mechanical failure.

In this respect, the present invention provides a batten fixing clip that allows battens to be installed onsite quickly and can be hidden or masked when installed. The clip also minimises the number of functional components by utilising an aperture on the resilient clip on the female connector to engage at least a portion of the female interface portion. This elegant design may improve the manufacture, assembly and reliability of the batten fixing clip.

In this specification, a "batten" refers to any elongate component used in an architectural environment. For example, the batten may be an extrusion such as a channel section of steel or a wooden plank. The batten may be for functional purposes (i.e. structural) or for aesthetic purposes (i.e. to improve the visual appearance of a building, environment, etc).

In this specification, a "support structure" refers to any structural component capable of supporting the batten. In other words, a support structure encompasses any structural component that can support a batten without buckling or failing. The support structure may form at least part of a balustrade system.

In this specification, a "balustrade system" refers to a rail supported by balusters in the form of battens.

The male connector may have a generally disc or cylindrical shape. However, it is also envisaged that the male connector may be any suitable three-dimensional shape that can engage the female connector. Other suitable shapes include a cuboid, a torus, a stadium (i.e. a rectangle with semi-circular ends), a triangular prism or a sphere.

The male connector may be made of any suitable material, for example, stainless steel, aluminium, alloy, composite, wood or polymers (such as ABS plastic and the like).

The batten interface portion of the male connector may comprise a fastener for attaching the male connector to a batten. The fastener may be any suitable fastener known in the art. For example, the batten interface portion may include a hole to receive a threaded bolt to secure a batten to the male connector. A nut may be threaded onto the bolt to reduce the likelihood of the threaded bolt disengaging the batten.

The male connector may have a generally disc shaped body including a flange for engaging the female connector. Suitably, the flange extends circumferentially from the body. However, it is envisaged that the flange may extend only part way around the circumference of the female connector interface portion. Furthermore, it is also envisaged that for the female connector interface portions with non-circular cross sections, the flange may extend all the way, or part the way around the female connector interface portion.

The flange may have a circumferential groove to receive an elastomeric ring to minimise wear. Suitably, at least part of the elastomeric ring protrudes from the groove and is compressed when the flange engages the female connector. However, it is also envisaged that the flange may have a slot or channel that is configured to receive an elastomeric component such that a part of the elastomeric component protrudes from the slot and is compressible when the flange engages the female connector. The elastomeric component may be provided in any geometric form.

The female connector may have a generally disc or cylindrical shape. However, it is also envisaged that the female connector may be any suitable three-dimensional shape that can engage the male connector. Other suitable shapes include a cuboid, a torus, a stadium (i.e. a rectangle with semi-circular ends), a triangular prism or a sphere.

The female connector may be made of any suitable material, for example, stainless steel, aluminium, alloy, wood, composite or polymers (such as ABS plastic and the like).

The female connector may comprise a base on which the retainer is located.

The base may form part of the male connector interface portion of the female connector. Suitably, the base comprises a fastener for attaching to a support structure.

The fastener may be any suitable fastener known in the art. For example, the support structure interface portion may include a hole to receive a threaded bolt to secure the female connector to the support structure. A nut may be threaded onto the bolt to reduce the likelihood of the threaded bolt disengaging the support structure.

The retainer comprises a pair of arms extending from the base of the female connector to define a channel dimensioned for receiving the female connector interface portion of the male connector. The arms are preferably integrally formed with the base. The base and arms may be cast or molded in one piece, for example by injection molding. However, it is also envisaged that the arms may be separately formed from the base and attached to the base by any means known in the art, for example bolting, welding, fusing or otherwise. Suitably, the retainer is configured to enable the female connector interface portion of the male connector to slide into the channel to engage the female connector.

Each arm includes a projection which extends inwardly into the channel. Each arm may form an L-shape or a T-shape to define the projection. Alternatively, each projection is in the form of a lip. Each projection is preferably integrally formed with its respective arm. The projections and arms may be cast or molded in one piece, for example by injection molding. However, it is also envisaged that the projections may be separately formed from the arms and attached to the arms by any means known in the art, for example bolting, welding, fusing or otherwise. When the female connector interface portion of the male connector is inserted into the channel, the resilient clip may reversibly deform towards the base to accommodate the female connector interface portion and deflect from the base when the aperture engages the female connector interface portion of the male connector. This pushes the female connector interface portion into abutment with the projections.

The female connector interface portion of the male connector may be inserted into the channel along a Y-axis such that the arms restrict movement of the male connector out of the channel along the X-axis. Suitably, the Y-axis is along the plane of the male connector.

The projections may restrict movement of the male connector in the channel in a third direction along the Z-axis.

The aperture may restrict movement of the male connector out of the channel along the Y-axis.

As such, the female connector constrains movement of the male connector in three dimensions: X-axis, Y-axis and Z-axis.

It is envisaged that the resilient clip may be made from any suitably resilient material. For example, the resilient clip may be made from any suitable metallic material, such as aluminium, copper, brass, stainless steel, or titanium. Alternatively, the resilient clip may be made from any suitable non-metallic material, such as rubber, polymer (polyethylene, EPDM, neoprene, etc.), carbon fibre and the like. Preferably, the selected material has a distinct fatigue limit that is above the stress applied to the resilient clip when mounting and dismounting the batten from the female connector. Preferably materials include stainless steel and titanium.

The resilient clip may be a tongue or plate that can flex to accommodate the male connector and bias the male connector against the retainer.

The resilient clip may be formed in any suitable shape that can flex to accommodate the male connector and bias the male connector against the retainer. Suitably, the resilient clip is a tongue or plate. More suitably, the resilient clip has a quadrilateral prism shape with an aperture or a torus shape (i.e. doughnut shaped).

In some embodiments, the resilient clip is curved. It is also envisaged that the resilient clip may be flat.

In this specification, the term "curved" refers to any deviation away from the plane defined by the resilient clip. The clip may be curved linearly or non-linearly away from the defined plane. In other words, the gradient of the curvature may be constant throughout the curve or may change throughout the curve.

In this specification, the term "flat" refers to the plane defined by the plate.

The aperture may be centrally located on the resilient clip. However, it is also envisaged that the aperture may be off-centre on the resilient clip.

The aperture passes through the resilient clip (i.e. a through hole). Alternatively, the aperture passes part way through the resilient clip (i.e. a blind hole). The aperture may have any shape suitable for engaging at least part of the female connector interface portion of the male connector. For example, if the female connector interface portion of the male connector is cylindrical or spherical shaped, the aperture may have a corresponding circular shape to accommodate the female connector interface portion. If the female connector interface portion of the male connector is cuboid shaped, the aperture may be rectangular shaped. If the female connector interface portion of the male connector is a triangular prism shaped, then the aperture may be triangular shaped.

The male connector interface portion of the female connector may have a rebate dimensioned to receive the resilient clip. The rebate may be any shape or size that can accommodate the resilient clip. For example, if the resilient clip is a quadrilateral prism shape, the rebate may have a square cross-section. If the resilient element is a torus shape (i.e. doughnut shaped), the rebate may have a circular cross-section.

The male connector interface portion may be configured to retain the resilient clip within the rebate. Suitably, the male connector interface portion includes at least one tab that extends into the rebate to frictionally retain the resilient clip within the rebate. The tab may be rigid, such that it deforms the resilient clip when the clip is inserted into the rebate. Alternatively, the tab may be resilient, such that it is reversibly deformed by the resilient clip as the resilient clip is inserted into the rebate.

The invention also provides a method of fixing a batten to a support structure using a batten fixing clip as set out in claim 1, comprising the steps:
inserting the female connector interface portion of the male connector into the male connector interface portion of the female connector; and
engaging the female connector interface portion of the male connector with the aperture of the resilient clip to fix the male connector to the female connector.

The method may include mounting a male connector onto a batten. Suitably, the method includes mounting a pair of male connectors onto a batten. More suitably, each of the pair of male connectors are mounted on opposing ends of the batten.

The method may include mounting a male connector along the length of a batten (i.e. a side of the batten).

The method may include mounting a male connector at an end of a batten. The male connector may be a tenon type male connector that is insertable into a mortised batten end.

The method may include mounting the female connector onto a support structure. Suitably, the method includes mounting a pair of female connectors onto the support structure. More suitably, each of the pair of female connectors are located at opposite ends of the support structure.

The method may include mounting a female connector on a surface of the support structure that is perpendicular to the ground (e.g. a sideways facing surface of the support structure).

The method may include mounting a female connector on a surface of the support structure that is parallel to the ground (e.g. an upwardly or downwardly facing surface of the support structure).

The method may include mounting a second female connector comprising a retainer without a resilient clip onto the support structure, the second female connector being modified such that it is without a resilient clip. Suitably, the modified female connector is mounted onto a lower rail of the support structure.

The applicant has found that excluding the resilient clip from the second female connector provides engineering tolerance to account for thermal movement, particularly thermal expansion of the components.

The inserting step may involve sliding the female connector interface portion of the male connector into the male connector interface portion of the female connector.

The inserting step may involve sliding the female connector interface portion into the channel formed by the retainer on the female connector.

The inserting step may involve sliding the female connector interface portion of the male connector downwardly into the male connector interface portion of the female connector. In this embodiment, the male connector is mounted along the length of a batten (i.e. a side of the batten) and the female connector is mounted on a surface of the support structure that is perpendicular to the ground (e.g. a sideways facing surface of the support structure).

The inserting step may involve sliding the female connector interface portion of the male connector laterally into the male connector interface portion of the female connector (i.e. along the ground). In this embodiment, the male connector is mounted at an end of a batten and the female connector is mounted on a surface of the support structure that is parallel to the ground (e.g. an upwardly or downwardly facing surface of the support structure).

The engaging step may involve sliding the female connector interface portion into the channel until the female connector interface portion on the male connector slots into the aperture on the resilient clip.

The method may involve engaging the first and second female connector interface portions with their corresponding male connector interface portions.

The method may involve inserting the first and second female connector interface portions into the channels of their respective second female connectors.

The invention also provides a balustrade assembly, comprising:
an upper rail and a lower rail fixed in a spaced apart arrangement;
a batten mounted with a pair of male connectors, each male connector comprising a female connector interface portion for engaging a female connector;
a lower female connector attached to the lower rail, the lower female connector comprising a male connector interface portion for receiving the female connector interface portion of a male connector; and
a batten fixing clip, as set out in claim 1, attached to the upper rail,
wherein the batten is fixed to the upper and lower rails by engaging the female connector interface portion of one of the pair of male connectors on the batten with the male connector interface portion of the upper female connector wherein the aperture receives at least part of a female connector interface portion and the clip biases the female connector interface portion against the retainer, and engaging the female connector interface portion of the other male connector on the batten with the male connector interface portion of the lower female connector.

The upper and lower rail may be fixed in a parallel arrangement.

The pair of male connectors may be mounted on one side of the batten. Suitably, each of the pair of male connectors are located on opposing ends on the same side of the batten.

Each of the pair of male connectors may be mounted at opposing ends of the batten.

One male connector may be mounted at an end of the batten and a second male connector may be mounted at a side of the opposing end of the batten.

The lower female connector may exclude the resilient clip. Removing the resilient clip provides a free end of the batten to accommodate expansion and contraction of the batten. The applicant has found that excluding the resilient clip on the lower female connector provides engineering tolerance to accommodate for thermal movement of the components.

### Brief Description of Drawings

The invention is described further by way of example with reference to the accompanying drawings of which:
Figure 1 is an isometric view of a batten fixing clip comprising a male and female connector according to an embodiment of the present invention.
Figure 2 is an exploded isometric view of the batten fixing clip shown in Figure 1.
Figure 3 is a top sectional view of the batten fixing clip shown in Figure 1 when attached to a batten and a support structure.
Figure 4 is a side sectional view of the batten fixing clip shown in Figure 1 when attached to a batten and a support structure.
Figure 5 is an exploded perspective view of a support structure.
Figure 6 is a perspective view of the support structure shown in Figure 5.
Figure 7 is an exploded perspective view of the support structure shown in Figure 5 with a plurality of female connectors positioned thereon.
Figure 8 is a perspective view of the support structure shown in Figure 7.
Figure 9 is an enlarged perspective view of a female connector on an upper rail of the support structure shown in Figure 7.
Figure 10 is an enlarged perspective view of a modified female connector on a lower rail of the support structure shown in Figure 7.
Figure 11 is a perspective view of a batten with a male connector projecting therefrom.
Figure 12 is a perspective view of the support structure shown in Figure 8 installed with the batten shown in Figure 11.
Figure 13 is a side sectional view of Figure 12 showing the alignment of the male connector on the batten with the female connector on the support structure.
Figure 14 is a perspective view of the support structure shown in Figure 8 during insertion of the male connector into the female connector.
Figure 15 is a side sectional view of Figure 14 showing the alignment of the male connector on the batten with the female connector on the support structure.
Figure 16 is a perspective view of the support structure shown in Figure 8 following attachment to the batten shown in Figure 11.
Figure 17 is a side sectional view of Figure 16 showing the male connector on the batten engaged with the female connector on the support structure.
Figure 18 is a perspective view of the completed balustrade system according to an embodiment of the present invention.
Figure 19 is a perspective view of a balustrade system according to another embodiment of the present invention, which further shows: a tenon type male connector (Figure 19A); a tenon type male connector and mortised batten end (Figure 19B); an elongate button type male connector (Figure 19C); an elongate button type male connector connected to an elongate type female connector (Figure 19D); and an adjustable lower rail (Figure 19E).
Figure 20 is a perspective view of a tenon type male connector shown in Figure 19A.
Figure 21 is a perspective view of an elongate button type male connector shows in Figure 19C.
Figure 22 is a perspective view of an elongate type female connector shown in Figures 19A and 19D.

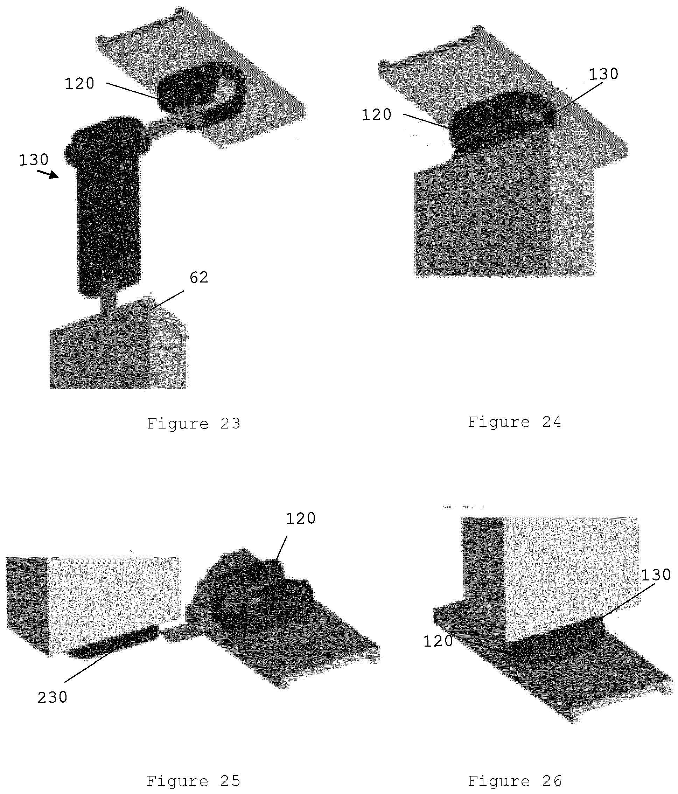

Figure 23 is a perspective exploded view of a tenon type male connector, batten and elongate type female connector according to an embodiment of the present invention.
Figure 24 is a perspective view of the tenon type male connector assembled to the batten and engaged with the elongate type female connector shown in Figure 23.
Figure 25 is a perspective exploded view of an elongate button type male connector prior to engagement with an elongate type female connector according to an embodiment of the present invention.
Figure 26 is a perspective view of the elongate button type male connector engaged with the elongate type female connector shown in Figure 25.
Figure 27 is a bottom perspective view of a tenon type male connector and a mortised batten end as shown in Figure 19B.
Figure 28 is a top perspective view of a tenon type male connector and a mortised batten end as shown in Figure 19B.
Figure 29 is a bottom perspective view of a mortise element of the mortised batten end of Figures 27 and 28.
Figure 30 is a top perspective view of a mortise element of the mortised batten end of Figures 27 and 28.

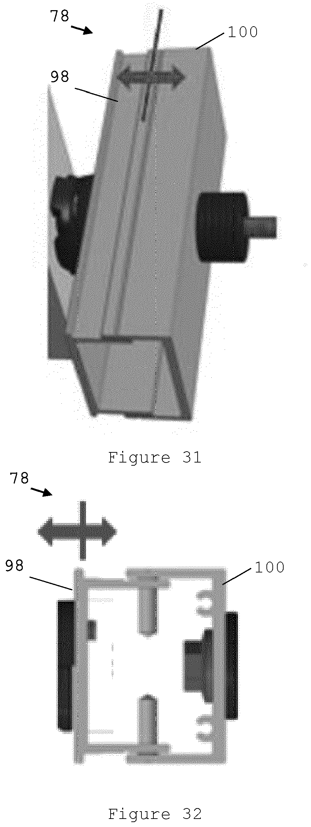

Figure 31 is a perspective view of and an adjustable lower rail as shown in Figure 19E.
Figure 32 is a sectional view the adjustable lower rail of Figure 31.
Figure 33A-33C are schematic views of different arrangements for mounting male connectors onto a batten, including: a side mounting arrangement (Figure 33A); an end mounting arrangement (Figure 33C) and a hybrid mounting arrangement (Figure 33B).
Figure 34A-34C are perspective view of different balustrade systems according to further embodiments of the present invention, including: a screen balustrade system

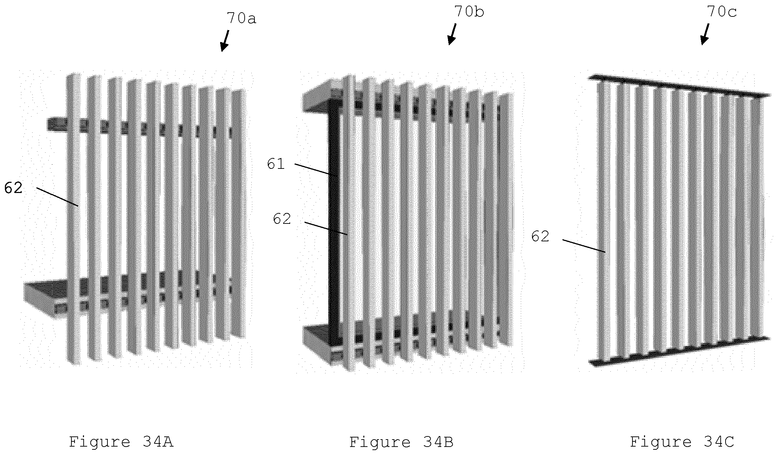

(Figure 34A); a facade balustrade system (Figure 34B); and a free standing balustrade system (Figure 34C).

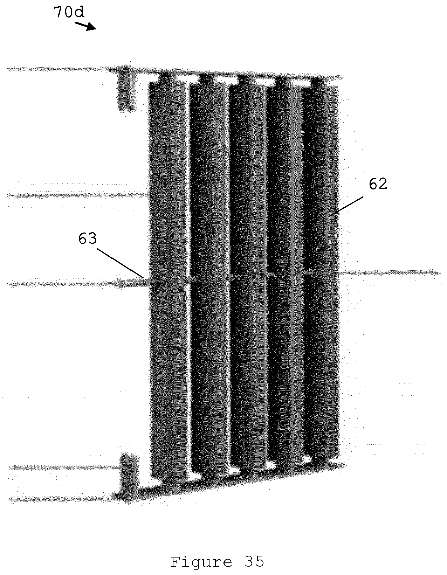

Figure 35 is a perspective view of a balustrade system using a mid-support rod according to another embodiment of the present invention.

### Detailed Description

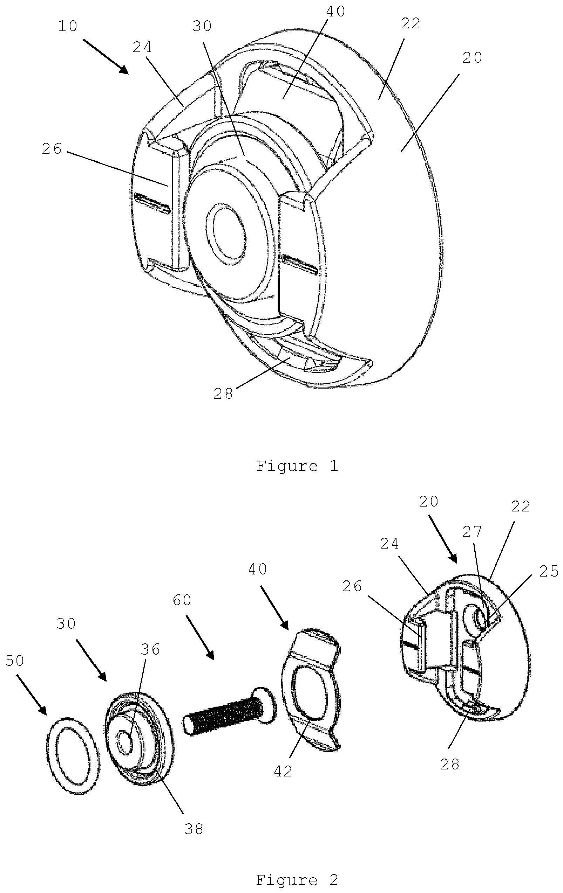

Figures 1 and 2 show a batten fixing clip 10 according to the present invention. The batten fixing clip 10 comprises a female connector 20 and a male connector 30.

The female connector 20 comprises a disc shaped base 22 with a pair of outwardly extending L-shaped arms 24 that define an open channel to receive the male connector 30. A pair of projections 26 of each arm defines a gap that is narrower in width than the channel to accommodate a batten interface portion 32 of the male connector 30.

The base 22 has a rebate 27 with a pair tabs 28 that extend from opposing sides of the base 22 into the rebate 27. The base 22 has a pair of holes 25 for receiving a fastening means, e.g. a bolt, screw or rivet for mounting the female connector 20 onto a support structure.

A resilient clip 40 in the form of a curved steel plate having a central aperture 42 is frictionally retained by the tabs 28 within the rebate 27. The resilient clip 40 is arranged such that it curves away from the base 22 and is configured to reversibly deform towards the base 22 by as the male connector 30 is inserted into the channel.

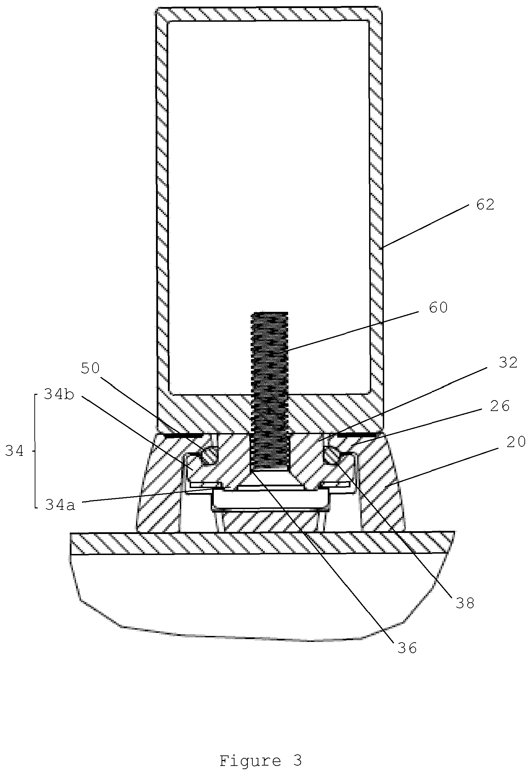

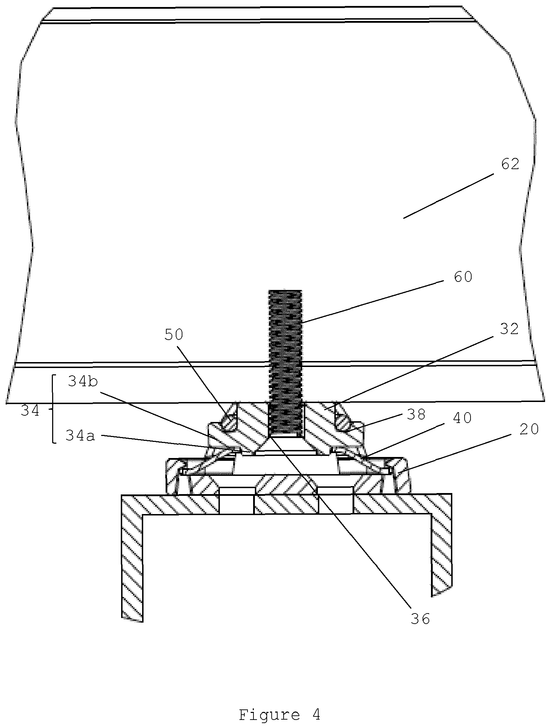

As best shown in Figures 3 and 4, the male connector 30 comprises a batten interface portion 32 for attachment to a batten 62 and a female connector interface portion 34 for engaging a female connector 20.

The batten interface portion 32 of the male connector 30 includes a hole which extends through the male connector 30 to receive a threaded bolt 60 to fix the male connector to the batten 62.

The female connector interface portion 34 of the male connector 30 comprises a free end 34a, and a flange 34b.

The male connector 30 can be described as having a generally disc shape with variable diameter across its axis, in which the flange 34b has the largest diameter and the free end 34a having the smallest diameter.

The free end 34a is dimensioned to be received by the aperture 42 of the resilient clip 40 to prevent the male connector from sliding out of the female connector when engaged. The flange 34b is dimensioned to be received within the channel of the female connector 20.

The flange 34b has a circumferential groove 38 that is configured to receive an elastomeric O-ring 50 such that it protrudes from the circumferential groove 38. The elastomeric ring 50 is configured to be compressed as the flange portion 34b is pushed into abutment with the projections 26 by the resilient clip 40.

The use of the batten fixing clip 10 as previously described will now be described in the context of providing a balustrade assembly.

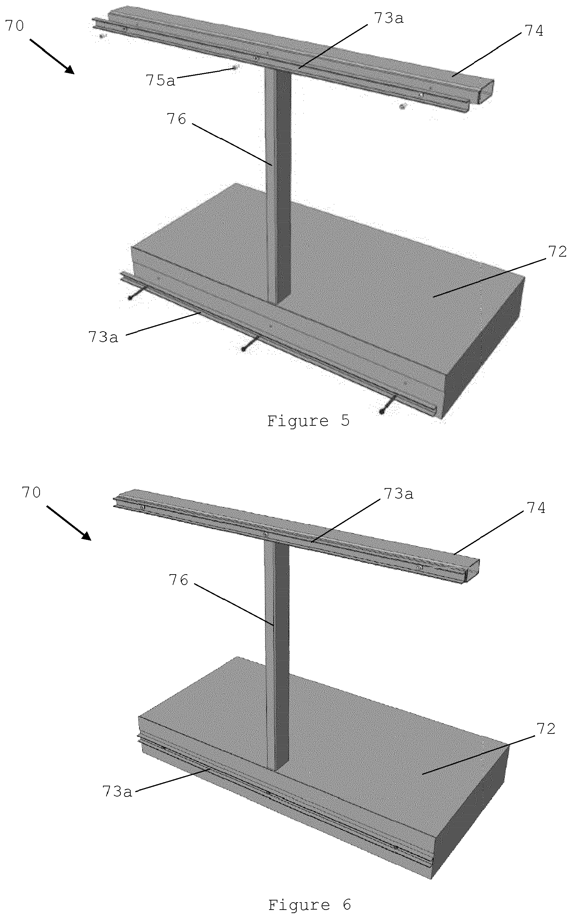

Figures 5 to 18 show the various stages involved in installing a balustrade assembly using the batten fixing clip shown in Figure 1.

Figures 5 and 6 show a support structure 70 comprising a floor 72 and a horizontal beam 74 supported above the floor by an upright column 76. A first pair of profiles 73a, suitably made from aluminium, are secured to a face of the floor 72 and horizontal beam 74. Each aluminium profile 73a has a central web and a pair of flanges projecting therefrom to define a channel. Each aluminium profile 73a is secured to the support structure 70 such that the channel of each aluminium profile 73a faces outwardly from the support structure 70. Each aluminium profile 73a has a series of holes spaced apart along the length of their central web. The holes are aligned with the holes on the respective faces of the floor 72 and horizontal beam 74 and are configured to receive fasteners 75a to secure the aluminium profiles 73a to the floor 72 and horizontal beam 74, as shown in Figure 5. Fasteners 75a can be any known fasteners such as rivets or screws.

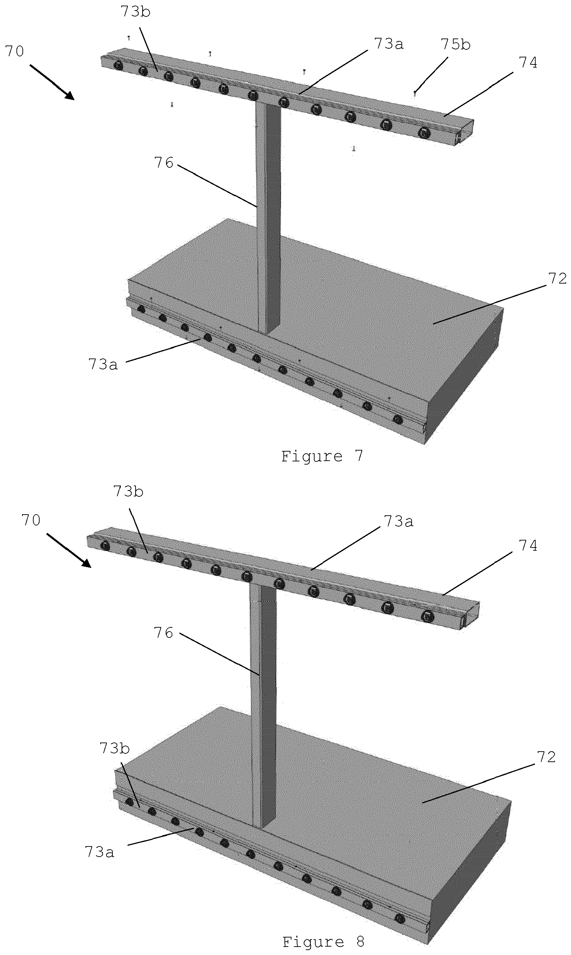

As shown in Figures 7 and 8, a second pair of aluminium profiles 73b are secured to the first pair of aluminium profiles 73a such that the channel in each of the second pair of aluminium profiles 73b faces inwardly towards the support structure 70. Suitably, the second pair of aluminium profiles 73b are shaped to slidably engage the first pair of profiles 73a.

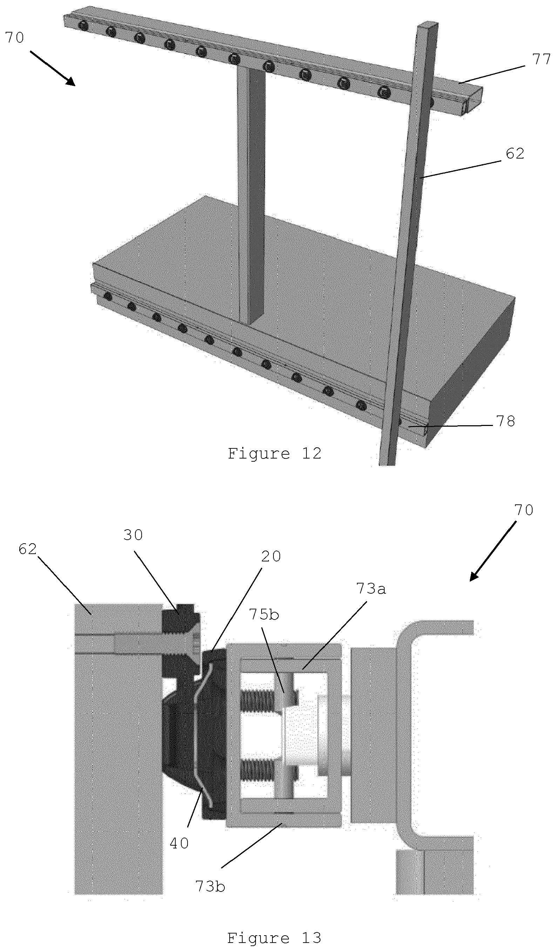

In this arrangement, the flanges of the first pair of aluminium profiles 73a overlap the second pair of aluminium profiles 73b (as best shown in Figures 13, 15 and 17).

Each of the first pair of aluminium profiles 73a have a series of holes along the length of their flanges that are aligned with the respective holes on the corresponding flanges of the second pair of aluminium profiles 73b. The aligned holes are configured for receiving a fastener 75b to secure the first aluminium profiles 73a to the second aluminium profiles 73b as best shown in Figures 13, 15 and 17.

The second pair of aluminium profiles 73b also have a series of holes along the length of their central web which are configured for receiving bolts 60 to attach female connectors 20 to the aluminium profiles 73b.

Female connectors 20 may be pre-mounted onto the second pair of aluminium profiles 73b before the aluminium profiles 73a are delivered onsite. This improves the efficiency of the installation process by avoiding the need for a user to mount the individual female connectors onsite.

Instead, a user can simply slide the second pair of aluminium profiles 73b having the pre-mounted female connectors 20 in place and begin fixing the battens 62 onto the aluminium profiles.

Once secured, the aluminium profiles 73a, 73b define upper and lower rails 77, 78 of the support structure 70.

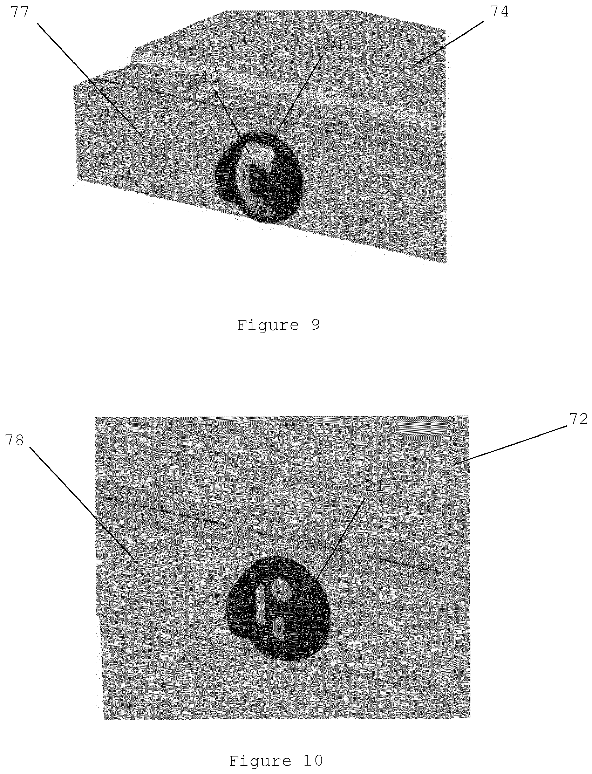

Figure 9 shows an enlarged view of the upper rail 77 which has a female connector 20, as previously described, attached thereto.

Figure 10 shows an enlarged view of the lower rail 78 which has a female connector 20 attached thereto. However, unlike the upper rail 77, the female connector 21 attached to the lower rail 78 is modified to exclude resilient clip 40. Excluding the resilient clip 40 from the female connector 20 on the lower rail 78 provides dimensional tolerance to account for thermal movement of the various components of the balustrade system. This may cause the battens to shift and misalign with the female connectors. The applicant has found that one female connector 20 with resilient clip 40 is sufficient to secure the batten to the support structure 70.

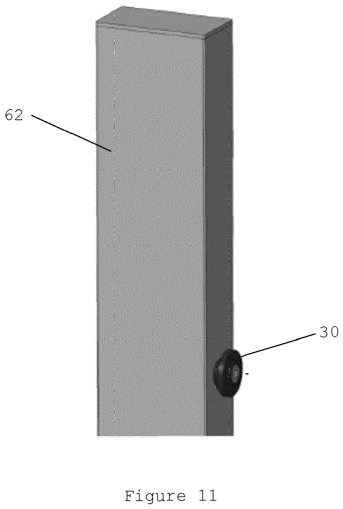

Figure 11 shows the batten 62 with a pair of male connectors 30 attached thereto. Each of the male connectors 30 is attached using a threaded bolt and protrudes from a side of the batten 62.

The pair of male connectors are located at opposing ends of the batten to form upper and lower male connectors 30 which correspond to female connectors 20 on the respective upper and lower rails 77, 78.

The steps involved in assembly of the batten 62 and the support structure 70 will now be described with reference to Figures 12 to 17.

Figures 12 and 13 show the batten 62 arranged in relation to the support structure 70 such that the male connector 30 is aligned with the channel of the female connector 20. As can be seen from Figure 13, the resilient clip 40 curves away from the base 22 in a bow-shape before engaging the male connector.

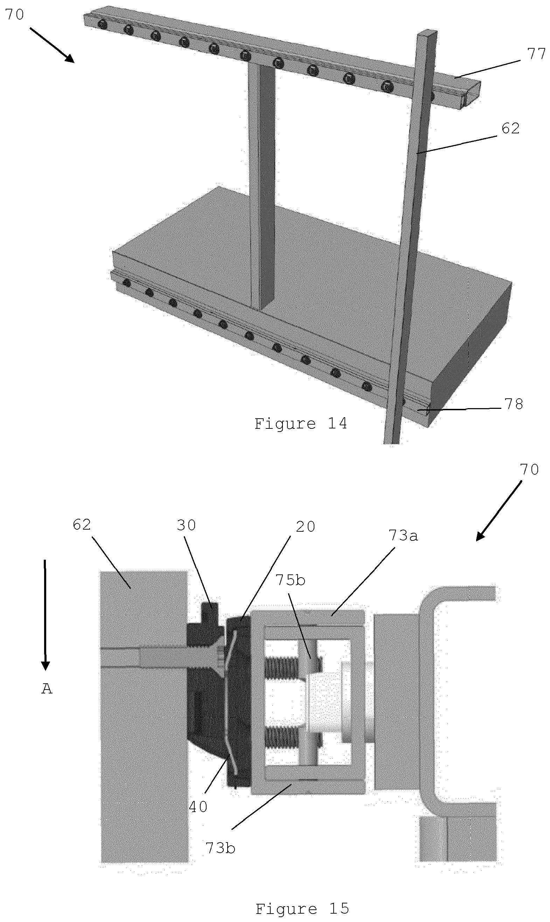

Figures 14 and 15 show the batten 62 sliding into the channel of the female connector 20 along direction A. As the male connector 30 enters the channel, the resilient clip 40 resiliently flexes towards the base 22 and partially flattens. In its flexed state, the resilient clip 40 biases the male connector against the projections 26 of the female connector 20.

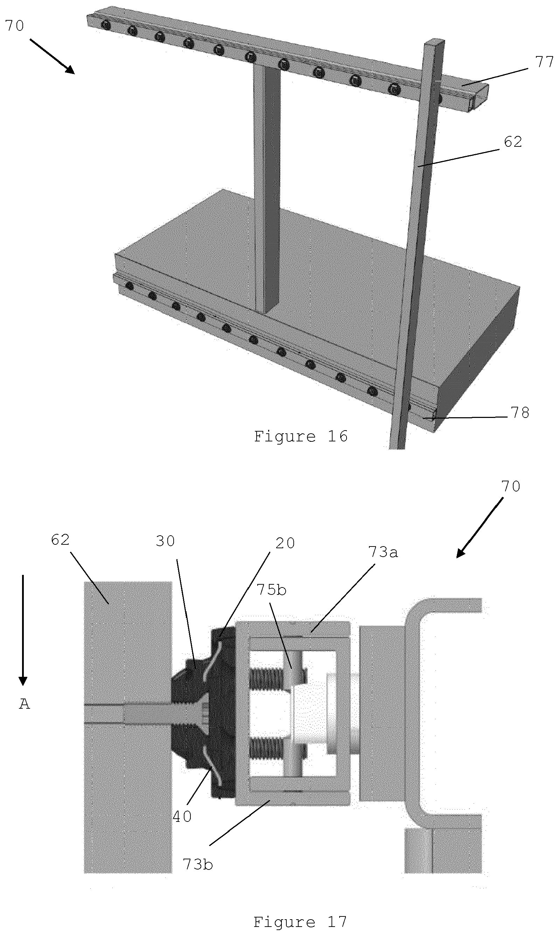

Figures 16 and 17 show the male connector 30 moving further into the channel along direction A until the free end 34a engages the aperture 42. This results in the resilient clip 40 deflecting from the base 22 to revert to its original shape which in turn pushes the flange 34b into abutment with the projections 26 and compresses elastomeric O-ring 50 between projections 26 and flange 34b (see Figures 3 and 4).

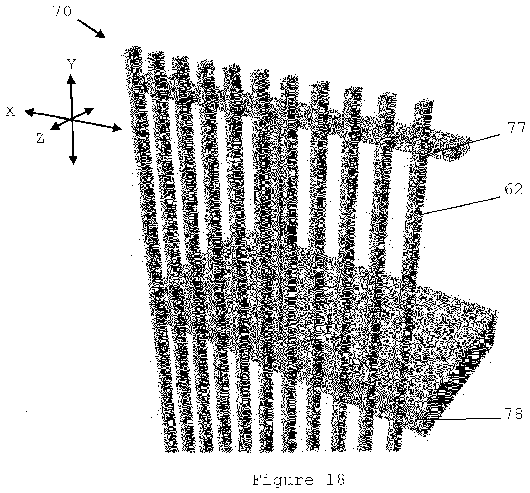

Figure 18 shows a completed balustrade assembly. As can be appreciated, the batten fixing clip 10 according to the present invention provides a secure attachment of the batten to the support structure while accommodating for movement of the batten over time for example by thermal expansion and contraction.

This is because the arms 24 restrict movement of the flange 34b from male connector 30 out of the channel of the female connector 20 along the X-axis, the projections 26 restrict movement of the flange 34b (see Figure 4) out of the channel of the female connector 20 along the Z-axis and the aperture 42 of the resilient clip 40 restricts movement of the end portion 34a (see Figure 4) out of the channel of the female connector 30 along the Y-axis (see Figure 18). As such, the batten fixing clip 10 restricts movement of the batten 62 relative to the support structure 70 in three dimensions X, Y and Z.

At the same time, the modified female connectors 21 on the lower rail 78 retain the batten within the channel of the modified female connector 21 while allowing for movement along the Y-axis.

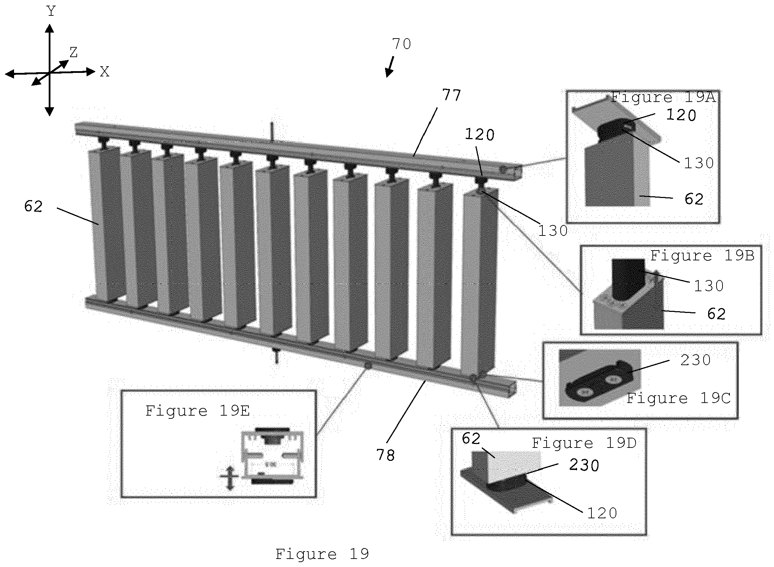

Figure 19 shows a balustrade assembly 70 according to another embodiment of the invention. The balustrade assembly 70 of Figure 19 comprises an upper rail 77, a lower rail 78 and a batten 62.

The balustrade assembly 70 of Figure 19 differs from the balustrade assembly 70 of Figure 18 in several ways described below.

The male connectors 130, 230 protrude from the ends of the batten 62 as opposed to the sides of the batten 62. Similarly, the female connectors 120 on the upper and lower rails 77, 78 face downwardly and upwardly, respectively.

Figures 19A and 19B show that the male connector 130 on the upper end of the batten 62 is a tenon type male connector 130 and the upper end of the batten 62 is mortised.

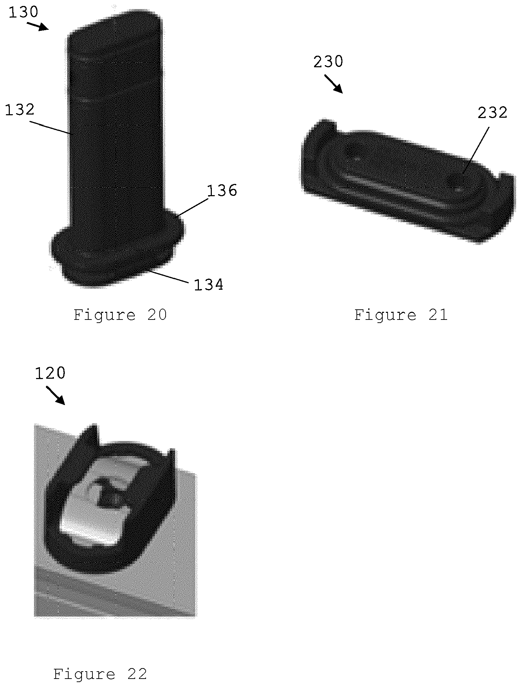

Figure 20 shows the tenon type male 130 connector which comprises a shank portion 132 and a head portion 134. The profiles of the shank portion 132 and the head portion 134 are a stadium shaped, i.e. rectangular with semi-circular ends. The head portion 134 comprises a flange 136 which extends around the base of the head 134 local to the junction with the shank portion 132.

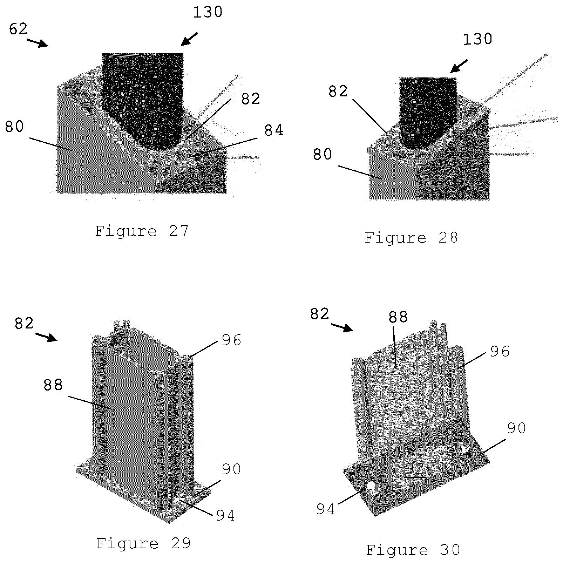

Figures 27 and 28 show a batten 62 with a mortised end. The batten 62 comprises an extruded box section 80 having walls which define a recess and a mortised element 82 that can be inserted into the recess. A pair of retaining elements 84 extend from the walls into the recess to frictionally secure the mortised element 82 to the extruded box section 80.

Figures 29 and 30 show the mortised element 82 which comprises a tubular section 88 with a flanged end 90. The flanged end 90 comprises a central opening 92 for receipt of a shank 132 of a tenon type male connector 130 and a plurality of holes 94 for receipt of fastening means, such as screws. The tubular section 88 has a stadium shaped profile (i.e. a rectangle with a pair of semi-circles positioned at opposite ends). Located proximal to each corner are retaining elements 96 which extend along the length of the tubular section 88. Each retaining element 96 is a C-shaped channel that aligns with a corresponding hole 94 in the flanged end 90 and into which a fastening means, such as a screw, can be inserted. Inserting the fastening means into the C-shaped channel causes the limbs of the C-shaped channel to expand outwardly such that they can come into abutment with the retaining elements 84 of the extruded box section 80, thus frictionally securing the mortised element 82 to the extruded box section 80.

When the tenon type male connector 130 is assembled with the mortised end of the batten 62, the shank portion 132 of the tenon type male connector 130 may be slidably retained within the central opening 92 to allow for thermal expansion of the balustrade system.

Figure 19C shows that the male connector on the lower end of the batten is an elongate button type male connector 230. Unlike the male connector 30, shown in Figures 1 and 2 for example, which has a circular shape when viewed in plan, the elongate button type male connector 230 is a stadium shape, i.e. rectangular with semi-circular ends, when viewed in plan. Figure 21 shows an isolated view of the elongate button type male connector 230. As can be seen in Figure 21, the elongate button type male connector 230 comprises a plurality of holes 232 for receiving fastening means to secure the elongate button type male connector 230 to a batten 62.

Figures 19A and 19D show that the female connectors 120 on both the upper and lower rails are an elongate type female connector, which is shaped to conform to the shape of the tenon type male connector 130 or the button type male connector 230. In other words, the elongate type female connector 120 has a stadium shape. Figure 22 shows an isolated view of the elongate type female connector 120.

Figure 19E shows a lower rail 78 which is height adjustable in the Y-axis. The lower rail 78 comprises first and second channel sections 98, 100. Each channel section comprises a base and a pair of flanges extending from the base to define a channel. The first channel section 98 is securable to a support structure. The second channel section 100 has a base that is larger than the base of the first channel section 98 such that when the first and second channel sections are aligned, the channels are facing each other with the flanges of the second channel section 100 overlapping the flanges of the first channel section 98. Each flange of the first channel section 98 has a slot shaped opening which is alignable with a corresponding circular opening on a respective flange of the second channel section 100, such that a fastener (i.e. a threaded bolt) can be inserted therethrough. Once inserted through the aligned openings the threaded bolt can be secured with a nut that is threaded onto the bolt and into engagement with an internal surface of the flange of the first channel section 98. The slot shaped opening may allow the first and second channel sections 98, 100 to be secured together with differing amounts of overlap between the flanges, which corresponds to the amount that the rail 78 is height adjustable in the Y-axis.

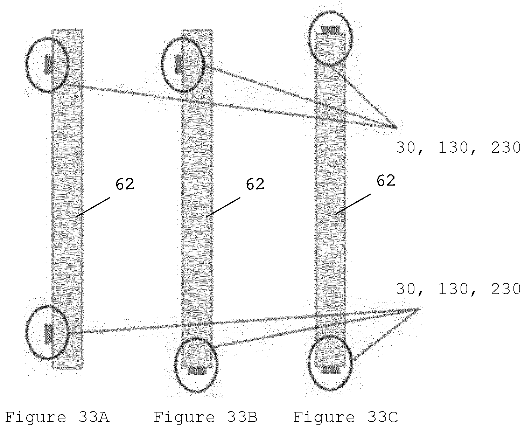

Figure 33A shows that the male connectors 30, 130, 230 can be mounted to protrude from one side of the batten 62. Figure 33C shows that the male connectors 30, 130, 230 can be mounted to protrude from ends of the batten. Figure 33B shows that one of the male connectors 30, 130, 230 (the upper male connector) can extend from a side of the batten 62 and the other male connector 30, 130, 230 (the lower male connector) can extend from an end of the batten 62. It is also contemplated that the upper male connector 30, 130, 230 may extend from the end of the batten 62 and the lower male connector 30, 130, 230 may extend from the side of the batten 62.

Figure 34A-34C show different balustrade systems 70a, 70b, 70c according to further embodiments of the present invention. Figure 34A shows a screen balustrade system 70a in which the male connectors 30, 130, 230 are arranged such that they protrude from the sides of the battens 62. Figure 34B shows a façade balustrade system 70b which is a similar arrangement to the screen balustrade system 70a albeit with a pane of glass 61 positioned behind the battens 62. Figure 34C shows a free-standing balustrade system 70c in which the male connectors 30, 130, 230 are arranged such that they protrude from ends of the battens 62.

Figure 35 shows a balustrade system 70d using a mid-support rod 63 according to a further embodiment of the invention. The balustrade system 70d of Figure 35 comprises battens 62 which have transverse holes extending therethrough and a threaded support rod 63 which is insertable through the holes and can be retained therein using spacers, such as threaded nuts. The applicant has found that the rod 63 prevents movement of the battens 62 which is particularly suitable for systems in which the spacing between adjacent battens 62 is greater than 0.2 meters, preferably greater than 0.4 meters, more preferably greater than 0.6 meters, even more preferably greater than 1.0 meters.

## Claims

1. A batten fixing clip (10), comprising:
a male connector (30) comprising a batten interface portion (32) for attachment to a batten, and a female connector interface portion (34) for engaging a female connector (20); and
a female connector (20) comprising a support structure interface portion for attaching to a support structure and a male connector interface portion for engaging the male connector (30), the male connector interface portion of the female connector (20) including a retainer,
the retainer comprising a pair of arms (24) extending from a base (22) of the female connector (20) to define a channel dimensioned for receiving the female connector interface portion (34) of the male connector (30), the batten fixing clip being **characterized in that** each arm (24) of the retainer includes a projection (26) which extends inwardly into the channel, and the female connector further includes a resilient clip (40),
the resilient clip (40) comprises an aperture (42), wherein said aperture (42) is a through-hole or a blind hole, that receives at least part of the female connector interface portion (34) of the male connector (30) and said resilient clip (40) biases the female connector interface portion (34) of the male connector (30) against the retainer.

2. The batten fixing clip (10) of claim 1, wherein the aperture (42) in the resilient clip (40) captures and secures the female connector interface portion (34) against movement relative to the female connector (20).

3. The batten fixing clip (10) of claim 1 or claim 2, wherein the resilient clip (40) curves away from the base (22) and is configured to reversibly deform towards the base (22).

4. The batten fixing clip (10) of any one of the preceding claims, wherein the resilient clip (40) is curved.

5. The batten fixing clip (10) of any one of the preceding claims, wherein the male connector interface portion of the female connector (20) has a rebate (27) dimensioned to receive the resilient clip (40).

6. The batten fixing clip (10) of claim 5, wherein the male connector interface portion includes at least one tab (28) that extends into the rebate (27) to frictionally retain the resilient clip (40) within the rebate (27).

7. A method of fixing a batten to a support structure using a batten fixing clip (10) according to claim 1, comprising the steps:
inserting the female connector interface portion (34) of the male connector (30) into the male connector interface portion of the female connector (20); and
engaging the female connector interface portion (34) of the male connector (30) with the aperture (42) of the resilient clip (40) to fix the male connector (30) to the female connector (20).

8. The method of claim 7, including mounting a male connector (30) onto a batten.

9. The method of claim 7 or claim 8, including mounting the female connector (20) onto a support structure.

10. The method of claim 7 or claim 8, including mounting a second female connector (21) comprising a retainer onto a support structure, the second female connector (21) being modified such that it is without a resilient clip (40) .

11. The method of any one of claims 7-10, wherein the inserting step involves sliding the female connector interface portion (34) of the male connector (30) into the male connector interface portion of the female connector (20) .

12. The method of any one of claims 7-11, wherein the inserting step involves sliding the female connector interface portion (34) into the channel formed by the retainer on the female connector (20).

13. A balustrade assembly (70), comprising:
an upper rail (77) and a lower rail (78) fixed in a spaced apart arrangement;
a batten (62) mounted with a pair of male connectors (30), each male connector (30) comprising a female connector interface portion (34) for engaging a female connector (20);
a lower female connector (20) attached to the lower rail (78), the lower female connector (20) comprising a male connector interface portion for receiving the female connector interface portion (34) of a male connector (30); and
a batten fixing clip (10) according to any one of claims 1-6, attached to the upper rail (77),
wherein the batten (62) is fixed to the upper and lower rails (77, 78) by engaging the female connector interface portion (34) of one of the pair of male connectors (30) on the batten (62) with the male connector interface portion of the upper female connector (20) wherein the aperture (42) receives at least part of a female connector interface portion (34) and the clip (40) biases the female connector interface portion (34) against the retainer, and engaging the female connector interface portion (34) of the other male connector (30) on the batten (62) with the male connector interface portion of the lower female connector (20).

## Patentansprüche

1. Lattenbefestigungsklammer (10), mit:
einem Steckverbinder (30) mit einem Lattenschnittstellenabschnitt (32) zum Anbringen an einer Latte und einem Buchsenverbinderschnittstellenabschnitt (34) zum Ineingriffbringen mit einem Buchsenverbinder (20); und
einem Buchsenverbinder (20) mit einem Stützstrukturschnittstellenabschnitt zum Anbringen an einer Stützstruktur und einem Steckerverbinderschnittstellenabschnitt zum Ineingriffbringen mit dem Steckerverbinder (30), wobei der Steckerverbinderschnittstellenabschnitt des Buchsenverbinders (20) eine Halterung hat,
die Halterung ein Paar Arme (24) hat, die sich von einer Basis (22) des Buchsensteckers (20) erstrecken, um einen Kanal zu definieren, der zur Aufnahme des Schnittstellenabschnitts (34) des Buchsensteckers (30) dimensioniert ist,
die Lattenbefestigungsklammer **dadurch gekennzeichnet ist, dass**
jeder Arm (24) der Halterung einen Vorsprung (26) hat, der sich nach innen in den Kanal erstreckt, und der Buchsenverbinder außerdem eine elastische Klammer (40) hat, wobei
die elastische Klammer (40) eine Öffnung (42) hat, wobei die Öffnung (42) ein Durchgangsloch oder ein Sackloch ist, das zumindest einen Teil des Buchsenverbinderschnittstellenabschnitt (34) des Steckverbinders (30) aufnimmt und die elastische Klammer (40) den Buchsenverbinderschnittstellenabschnitt (34) des Steckerverbinders (30) gegen die Halterung drückt.

2. Lattenbefestigungsklammer (10) nach Anspruch 1, wobei die Öffnung (42) in der elastischen Klammer (40) den Buchsenverbindungsschnittstellenabschnitt (34) erfasst und gegen eine Bewegung relativ zu dem Buchsenverbinder (20) sichert.

3. Lattenbefestigungsklammer (10) nach Anspruch 1 oder 2, wobei die elastische Klammer (40) von der Basis (22) weg gekrümmt ist und so konfiguriert ist, dass sie sich in Richtung der Basis (22) reversibel verformt.

4. Lattenbefestigungsklammer (10) nach einem der vorangehenden Ansprüche, wobei die elastische Klammer (40) gekrümmt ist.

5. Lattenbefestigungsklammer (10) nach einem der vorangehenden Ansprüche, wobei der Steckerverbinderschnittstellenabschnitt des Buchsenverbinders (20) eine Auskehlung (27) aufweist, die so dimensioniert ist, dass sie die elastische Klammer (40) aufnimmt.

6. Lattenbefestigungsklammer (10) nach Anspruch 5, wobei der Steckerverbinderschnittstellenabschnitt mindestens eine Lasche (28) aufweist, die sich in die Aussparung (27) erstreckt, um die elastische Klammer (40) durch Reibung in der Aussparung (27) zu halten.

7. Verfahren zum Befestigen einer Latte an einer Tragstruktur unter Verwendung einer Lattenbefestigungsklammer (10) gemäß Anspruch 1, mit den Schritten:
Einsetzen des Buchsenverbindungsschnittstellenabschnitts (34) des Steckerverbinders (30) in den Steckerverbinderschnittstellenabschnitt der Buchsenverbindung (20); und Ineingriffbringen des Buchsenverbindungsschnittstellenabschnitts (34) des Steckerverbinders (30) mit der Öffnung (42) des elastischen Clips (40), um den Steckerverbinder (30) an der Buchsenverbindung (20) zu befestigen.

8. Verfahren nach Anspruch 7, mit dem Einbau eines Steckerverbinders (30) in eine Latte.

9. Verfahren nach Anspruch 7 oder 8, mit dem Einbau des Buchsenverbinders (20) in eine Tragstruktur.

10. Verfahren nach Anspruch 7 oder 8, mit dem Einbau einer zweiten Buchsenverbindung (21) mit einer Halterung in eine Tragstruktur, wobei die zweite Buchsenverbindung (21) so modifiziert ist, dass sie keine elastische Klammer (40) aufweist.

11. Verfahren nach einem der Ansprüche 7 bis 10, wobei der Schritt des Einsetzens das Einschieben des Buchsenverbinderschnittstellenabschnitts (34) des Steckerverbinders (30) in den Steckerverbinderschnittstellenabschnitt der Buchsenverbindung (20) umfasst.

12. Verfahren nach einem der Ansprüche 7 bis 11, wobei der Schritt des Einsetzens das Einschieben des Buchsenverbindungsschnittstellenabschnitts (34) in den Kanal umfasst, der durch die Halterung an der Buchsensteckverbindung (20) ausgebildet ist.

13. Geländeranordnung (70) mit:
einer oberen Schiene (77) und einer unteren Schiene (78), die in einer beabstandeten Anordnung befestigt sind;
eine Latte (62), die mit einem Paar Steckverbindern (30) eingebaut ist, wobei jeder Steckverbinder (30) einen Buchsenverbindungsschnittstellenabschnitt (34) zum Ineingriffbringen eines Buchsenverbinders (20) hat;
einen unteren Buchsenverbinder (20), der an der unteren Schiene (78) angebracht ist, wobei der untere Buchsenverbinder (20) einen Steckerverbinderschnittstellenabschnitt zum Aufnehmen des Buchsenverbindungsschnittstellenabschnitts (34) eines Steckerverbinders (30) hat;
und eine Lattenbefestigungsklammer (10) gemäß einem der Ansprüche 1 bis 6, die an der oberen Schiene (77) angebracht ist, wobei die Latte (62) an der oberen und unteren Schiene (77, 78) durch Ineingriffbringen des Buchsenverbindungsschnittstellenabschnitts (34) eines der beiden Steckerverbinder (30) an der Latte (62) mit dem Steckerverbindungsschnittstellenabschnitt des oberen Buchsenverbinders (20) in Eingriff zu bringen, wobei die Öffnung (42) mindestens einen Teil eines Buchsenverbindungsschnittstellenabschnitts (34) aufnimmt und die Klammer (40) den Buchsenverbindungsschnittstellenabschnitt (34) gegen die Halterung vorspannt, und Ineingriffbringen des Buchsenverbindungsschnittstellenabschnitts (34) des anderen Steckerverbinders (30) auf der Latte (62) mit dem Steckerverbindungsschnittstellenabschnitt des unteren Buchsenverbinders (20).

## Revendications

1. - Attache de fixation de latte (10), comprenant :
un connecteur mâle (30) comprenant une partie d'interface de latte (32) pour une fixation à une latte, et une partie d'interface de connecteur femelle (34) pour un engagement avec un connecteur femelle (20) ; et
un connecteur femelle (20) comprenant une partie d'interface de structure de support pour une fixation à une structure de support et une partie d'interface de connecteur mâle pour un engagement avec le connecteur mâle (30), la partie d'interface de connecteur mâle du connecteur femelle (20) comprenant un dispositif de retenue,
le dispositif de retenue comprenant une paire de bras (24) s'étendant à partir d'une base (22) du connecteur femelle (20) pour définir un canal dimensionné pour recevoir la partie d'interface de connecteur femelle (34) du connecteur mâle (30),
l'attache de fixation de latte étant **caractérisée par le fait que** chaque bras (24) du dispositif de retenue comprend une saillie (26) qui s'étend vers l'intérieur dans le canal, et le connecteur femelle comprend en outre une attache élastique (40),
l'attache élastique (40) comprend une ouverture (42), ladite ouverture (42) étant un trou traversant ou un trou borgne qui reçoit au moins une partie de la partie d'interface de connecteur femelle (34) du connecteur mâle (30) et ladite attache élastique (40) sollicitant la partie d'interface de connecteur femelle (34) du connecteur mâle (30) contre le dispositif de retenue.

2. - Attache de fixation de latte (10) selon la revendication 1, dans laquelle l'ouverture (42) dans l'attache élastique (40) capture et maintient la partie d'interface de connecteur femelle (34) vis-à-vis d'un mouvement par rapport au connecteur femelle (20).

3. - Attache de fixation de lattes (10) selon la revendication 1 ou la revendication 2, dans laquelle l'attache élastique (40) s'incurve à l'opposé de la base (22) et est configurée pour se déformer de manière réversible vers la base (22).

4. - Attache de fixation de latte (10) selon l'une quelconque des revendications précédentes, dans laquelle l'attache élastique (40) est incurvée.

5. - Attache de fixation de latte (10) selon l'une quelconque des revendications précédentes, dans laquelle la partie d'interface de connecteur mâle du connecteur femelle (20) a une feuillure (27) dimensionnée pour recevoir l'attache élastique (40).

6. - Attache de fixation de latte (10) selon la revendication 5, dans laquelle la partie d'interface de connecteur mâle comprend au moins une languette (28) qui s'étend dans la feuillure (27) pour retenir par friction l'attache élastique (40) à l'intérieur de la feuillure (27) .

7. - Procédé de fixation d'une latte à une structure de support à l'aide d'une attache de fixation de latte (10) selon la revendication 1, comprenant les étapes :
introduire la partie d'interface de connecteur femelle (34) du connecteur mâle (30) dans la partie d'interface de connecteur mâle du connecteur femelle (20) ; et
engager la partie d'interface de connecteur femelle (34) du connecteur mâle (30) avec l'ouverture (42) de l'attache élastique (40) pour fixer le connecteur mâle (30) au connecteur femelle (20).

8. - Procédé selon la revendication 7, comprenant monter un connecteur mâle (30) sur une latte.

9. - Procédé selon la revendication 7 ou la revendication 8, comprenant monter le connecteur femelle (20) sur une structure de support.

10. - Procédé selon la revendication 7 ou la revendication 8, comprenant monter un second connecteur femelle (21) comprenant un dispositif de retenue sur une structure de support, le second connecteur femelle (21) étant modifié de telle sorte qu'il est dépourvu d'attache élastique (40).

11. - Procédé selon l'une quelconque des revendications 7 à 10, dans lequel l'étape d'introduction met en jeu un coulissement de la partie d'interface de connecteur femelle (34) du connecteur mâle (30) dans la partie d'interface de connecteur mâle du connecteur femelle (20) .

12. - Procédé selon l'une quelconque des revendications 7 à 11, dans lequel l'étape d'introduction met en jeu un coulissement de la partie d'interface de connecteur femelle (34) dans le canal formé par le dispositif de retenue sur le connecteur femelle (20).

13. - Ensemble balustrade (70) comprenant :
un rail supérieur (77) et un rail inférieur (78) fixés de manière espacée ;
une latte (62) montée avec une paire de connecteurs mâles (30), chaque connecteur mâle (30) comprenant une partie d'interface de connecteur femelle (34) destinée à s'engager avec un connecteur femelle (20) ;
un connecteur femelle inférieur (20) fixé au rail inférieur (78), le connecteur femelle inférieur (20) comprenant une partie d'interface de connecteur mâle destinée à recevoir la partie d'interface de connecteur femelle (34) d'un connecteur mâle (30) ; et
une attache de fixation de latte (10) selon l'une quelconque des revendications 1 à 6, fixée au rail supérieur (77),
la latte (62) étant fixée aux rails supérieur et inférieur (77, 78) par engagement de la partie d'interface de connecteur femelle (34) de l'un de la paire de connecteurs mâles (30) sur la latte (62) avec la partie d'interface de connecteur mâle du connecteur femelle supérieur (20), l'ouverture (42) recevant au moins une portion d'une partie d'interface de connecteur femelle (34) et l'attache (40) sollicitant la partie d'interface de connecteur femelle (34) contre le dispositif de retenue, et engagement de la partie d'interface de connecteur femelle (34) de l'autre connecteur mâle (30) sur la latte (62) avec la partie d'interface de connecteur mâle du connecteur femelle inférieur (20).
